# EUROPEAN PATENT APPLICATION

(11) **EP 2 876 793 A1**
(43) Date of publication of application: **27.05.2015**
(21) Application number: 13193976.1
(22) Date of filing: 22.11.2013
(51) Int. Cl.: H02M 1/12, H02M 7/483, H02M 7/487

(54) **Method and arrangement for reducing current stress in intermediate circuit of three-level inverter**

(71) Applicant: ABB Oy, 00380 Helsinki (FI)
(72) Inventor: Viitanen, Tero, 00380 Helsinki (FI); Alahuhtala, Jarno, 00380 Helsinki (FI); Heikkilä, Samuli, 00380 Helsinki (FI); Hakkarainen, Anna, 00380 Helsinki (FI)
(74) Representative: Kolster Oy Ab

(57) **Abstract**

A method and arrangement for reducing current stress in an intermediate circuit of a three-level inverter comprising a first capacitance and a second capacitance, the arrangement comprising means (10) for modifying a voltage reference U₁ of the inverter by adding a third harmonic U₃ to the voltage reference, means (20) for pulse width modulation controlling the inverter according to the modified voltage reference, and means (30) for adjusting the amplitude and/or the phase difference of the third harmonic added to the voltage reference of the inverter such that a quantity indicating a magnitude of a current stress on the first capacitance and the second capacitance at a frequency of the third harmonic is reduced substantially to a minimum or below a predetermined level.

## Description

### Field of the invention

The invention relates to a method and an arrangement for reducing current stress in an intermediate circuit of a three-level inverter, and an inverter.

### Background of the invention

Some converters, such as inverters or rectifiers, may have three DC poles. In addition to positive and negative DC poles, they have a neutral DC pole. For example, three-level converters have three DC poles. Examples of three-level converters are given in T. Brückner, S. Bernet and H. Güldner, "The Active NPC Converter and Its Loss-Balancing Control", IEEE Transactions on Industrial Electronics, Vol. 52, No. 3, June 2005. In particular, examples of three-level neutral-point-clamped (NPC) converters and active neutral-point-clamped (ANPC) converters are given.

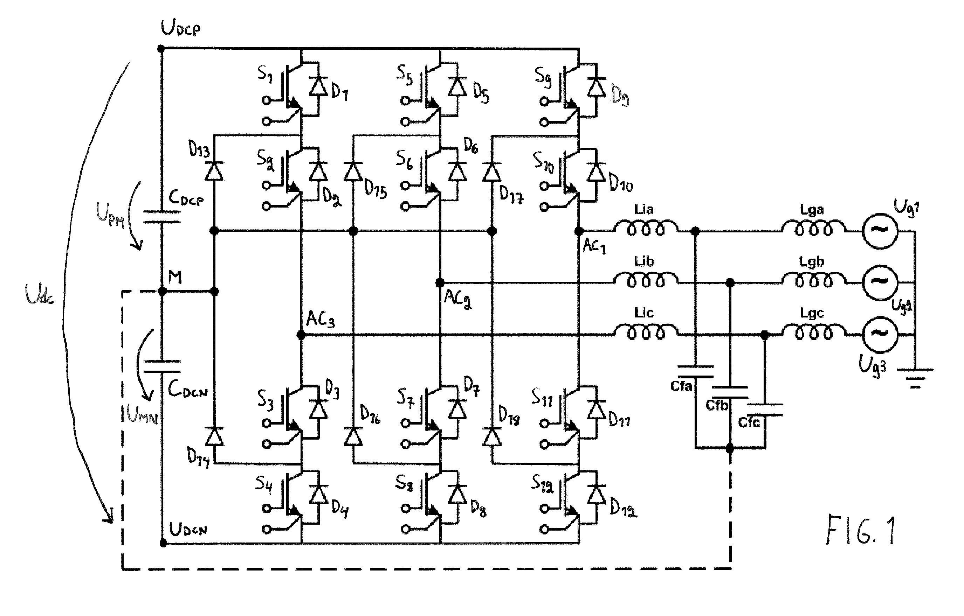

Figure 1 shows an example of a main circuit of a three-level NPC inverter. The exemplary inverter comprises a positive direct current pole U_{DCP}, a negative direct current pole U_{DCN}, a neutral direct current pole M, and three switching branches. A DC intermediate circuit of the exemplary inverter comprises two capacitances C_{DCP} and C_{DCN} each comprising at least one capacitor as illustrated. The inverter supplies a three phase power system U_{g1}, U_{g2}, U_{g3} connected to its alternating current poles AC₁, AC₂, AC₃ via an output filter. The output filter connected to the alternating current poles AC₁, AC₂, AC₃ of the inverter is an LCL type of filter, which comprises six inductances Lia, Lib, Lic, Lga, Lgb, Lgc and three star-connected capacitances Cfa, Cfb, Cfc. It is possible to connect the star point of the LCL output filter to the neutral direct current pole M of the DC intermediate circuit as shown with a dashed line in the figure. Such a connection is called a virtual earthing.

Because the DC intermediate circuit of a three-level converter is divided into two parts and because it is possible to connect a phase output of the converter to the middle point, i.e. the neutral direct current pole M, it is possible that the voltages U_{PM}, U_{MN} of the capacitors of the intermediate circuit can divide the total voltage U_{dc} of the intermediate circuit in an arbitrary manner. In order to prevent this problem, the voltages U_{PM}, U_{MN} of the capacitors of the intermediate circuit may need to be balanced by means of control.

In order to increase a linear modulation range of the inverter it is possible to add a common-mode voltage component having a frequency of a third harmonic (and its multiples) to the voltage reference of the inverter. A typical example of this is an added third harmonic which is 1/6 of the basic wave which, when in-phase with the basic wave, produces an increase of 15% to the linear modulation range of the inverter.

Generally most balancing methods of the voltage of the NPC inverter based on control (not passive balancing with resistors etc.) tend to generate a common-mode voltage component which typically affects average switching ratios of the phase currents between the capacitors of the intermediate circuit. In a conventional NPC inverter (example of Figure 1 without the dashed line) the common-mode voltage component in modulation can vary freely within the available voltage window. If the star point of the LCL output filter of the inverter is connected to the middle point of the intermediate circuit (example of Figure 1 with the dashed line), there will be a frequency limitation to the common-mode voltage component produced by the inverter because of the common-mode resonance circuit of the virtual earthing connection. In order to avoid the common-mode resonance, the common-mode component added to the voltage reference of the inverter may be a pure third harmonic.

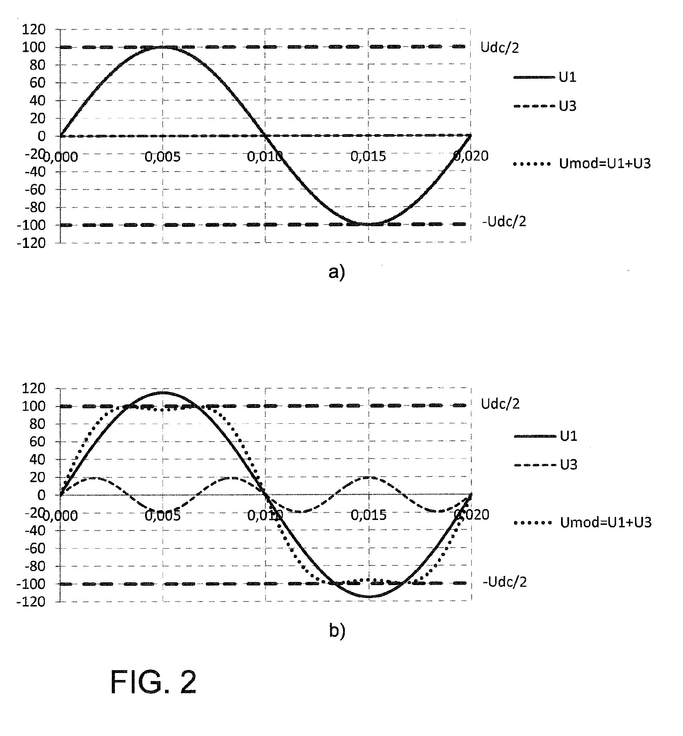

Figure 2 shows an example of the effect of adding the third harmonic U₃ to the basic frequency voltage reference U₁ of the inverter, where:
U₁ = a*sin(ωt), and
U₃ = Amp3*sin(3ωt+Phi3), where
a = amplitude of the voltage reference,
ω = angular velocity,
t = time,
Amp3 = amplitude of the third harmonic, and
Phi3 = phase difference of the third harmonic.

The modified voltage reference U_{mod} = U₁ + U₃ = a*sin(ωt) + Amp3*sin(3ωt+Phi3) may be realized within the voltage window of the inverter when the instantaneous maximum value is less than or equal to U_{dc}/2. Example a) of Figure 2 shows a case without any added third harmonic and U₁ = 100%. Example b) of Figure 2 shows a case with a third harmonic (16.7%) added to maximize the basic wave (U₁ = 115%).

A particular problem related to the three-level inverters is a significant low-frequency current stress of the capacitors of the intermediate circuit. This low-frequency current stress is a third multiple of the basic frequency, regardless of the modulation method. The low-frequency current stress can be very detrimental to the life span of the capacitors of the intermediate circuit, particularly when electrolytic capacitors are used, because losses produced by the low-frequency current stress may significantly shorten the lifetime of the capacitors.

### Brief description of the invention

An object of the invention is to provide a method and an apparatus so as to solve or at least alleviate the above problems. The object of the invention is achieved by a method, a computer program product, an arrangement and an inverter that are characterized by what is stated in the independent claims. Preferred embodiments of the invention are described in the dependent claims.

The invention is based on the idea of adjusting the amplitude and/or the phase difference of a third harmonic added to a voltage reference of a three-level inverter such that a quantity indicating a magnitude of a current stress on a first capacitance of an intermediate circuit of the inverter and a second capacitance of an intermediate circuit of the inverter at a frequency of the third harmonic is reduced substantially to a minimum or below a predetermined level.

The solution of the invention provides the advantage that the lifetime of the capacitors of the intermediate circuit can be increased because of the lower low-frequency current stress. Alternatively, it is possible to use less expensive capacitors to achieve a certain lifetime. The applicant has further noted that the solution of the invention reduces or removes a low-frequency variation of an envelope of a modulated output voltage of the inverter which in turn enhances the adjustability of the inverter.

### Brief description of the figures

The invention will now be explained in greater detail in connection with preferred embodiments and with reference to the attached drawings, in which:
Figure 1 shows a circuit diagram of a three-phase three-level inverter according to an embodiment;
Figure 2 shows a diagram of voltage references according to embodiments;
Figure 3 shows a block diagram of an arrangement according to an embodiment;
Figure 4 shows a diagram of voltage references according to embodiments;
Figure 5 shows a diagram of adjusting the phase difference of the third harmonic according to embodiments; and
Figure 6 shows a diagram of voltage references according to embodiments.

### Detailed description of the invention

The application of the invention is not restricted to any specific system, but it may be applied to various electric systems. In addition, the use of the invention is not restricted to any system utilizing a specific basic frequency or to any specific voltage level. While the following examples relate to a neutral-point-clamped inverter, the invention may be applied to any three-level inverter that has three DC poles, namely a positive direct current pole, a negative direct current pole, and a neutral direct current pole.

Figure 1 shows an exemplary circuit diagram of a three-phase three-level inverter in which various embodiments can be applied. It should be noted that the figure only presents elements essential to the understanding of the invention. The three-phase three-level inverter comprises a positive direct current pole U_{DCP}, a negative direct current pole U_{DCN}, a neutral direct current pole M, and three switching branches, each switching branch comprising four controllable semiconductor switches connected in series between the positive direct current pole and the negative direct current pole. More specifically, each switching branch of the three-phase three-level inverter comprises an alternating current pole AC₁, AC₂, AC₃ and a first controllable semiconductor switch S₁, S₅, S₉ and a second controllable semiconductor switch S₂, S₆, S₁₀ connected in series between the positive direct current pole U_{DCP} and the alternating current pole AC₁, AC₂, AC₃ of the switching branch, wherein the first controllable semiconductor switch S₁, S₅, S₉ is connected to the positive direct current pole U_{DCP}. A first diode D₁, D₅, D₉ may be connected in parallel to the first controllable semiconductor switch S₁, S₅, S₉ and a second diode D₂, D₆, D₁₀ may be connected in parallel to the second controllable semiconductor switch S₂, S₆, S₁₀. Further, each switching branch comprises a third controllable semiconductor switch S₃, S₇, S₁₁ and a fourth controllable semiconductor switch S₄, S₈, S₁₂ connected in series between the negative direct current pole U_{DCN} and the alternating current pole AC₁, AC₂, AC₃ of the switching branch, wherein the fourth controllable semiconductor switch S₄, S₈, S₁₂ is connected to the negative direct current pole U_{DCN}. A third diode D₃, D₇, D₁₁ may be connected in parallel to the third controllable semiconductor switch S₃, S₇, S₁₁, and a fourth diode D₄, D₈, D₁₂ may be connected in parallel to the fourth controllable semiconductor switch S₄, S₈, S₁₂. Further, each switching branch comprises a fifth diode D₁₃, D₁₅, D₁₇ connected between the neutral direct current pole M and a connection point between the first controllable semiconductor switch S₁, S₅, S₉ and the second controllable semiconductor switch S₂, S₆, S₁₀, and a sixth diode D₁₄, D₁₆, D₁₈ connected between the neutral direct current pole M and a connection point between the third controllable semiconductor switch S₃, S₇, S₁₁ and the fourth controllable semiconductor switch S₄, S₈, S₁₂. The controllable semiconductor switches may be IGBTs (Insulated Gate Bipolar Transistor) or FETs (Field-Effect Transistor) or any corresponding controllable semiconductor switches. For the sake of clarity, Figure 1 does not show any control connections via which the controllable semiconductor switches S₁ to S₁₂ are controlled. The control of the semiconductor switches S₁ to S₁₂ may involve one or more control components. While the inverter of the example of Figure 1 is a neutral-point-clamped inverter, the inverter could be an active neutral-point-clamped inverter, for example, or another type of three-level inverter. Moreover, the number of switching branches and the number of controllable semiconductor switches in each switching branch may vary. According to an embodiment, the inverter may comprise at least three switching branches such that each switching branch comprises at least two controllable semiconductor switches connected in series between the positive direct current pole and the negative direct current pole.

Figure 1 further shows an example of a DC intermediate circuit of the exemplary inverter, which DC intermediate circuit comprises a first capacitance C_{DCP} connected between the positive direct current pole U_{DCN} of the inverter and the neutral direct current pole M of the inverter and a second capacitance C_{DCN} connected between the neutral direct current pole M of the inverter and the negative direct current pole U_{DCN} of the inverter as illustrated. Each of the first and second capacitances may comprise one or more capacitors. The structure of the intermediate circuit could also be different, depending on the circuit configuration used. The exemplary inverter of Figure 1 may supply a three-phase alternating current network through its alternating current poles AC₁, AC₂, AC₃. There may be an output filter connected to the alternating current poles AC₁, AC₂, AC₃ of the inverter. The output filter may be an LC or LCL type of filter, for example. Figure 1 illustrates an LCL type of filter, which comprises six inductances Lia, Lib, Lic, Lga, Lgb, Lgc and three star-connected capacitances Cfa, Cfb, Cfc. It is possible to connect the star point of the LCL output filter to the neutral direct current pole M of the DC intermediate circuit as shown with a dashed line in the figure. Such a connection is called a virtual earthing. This connection may also be omitted.

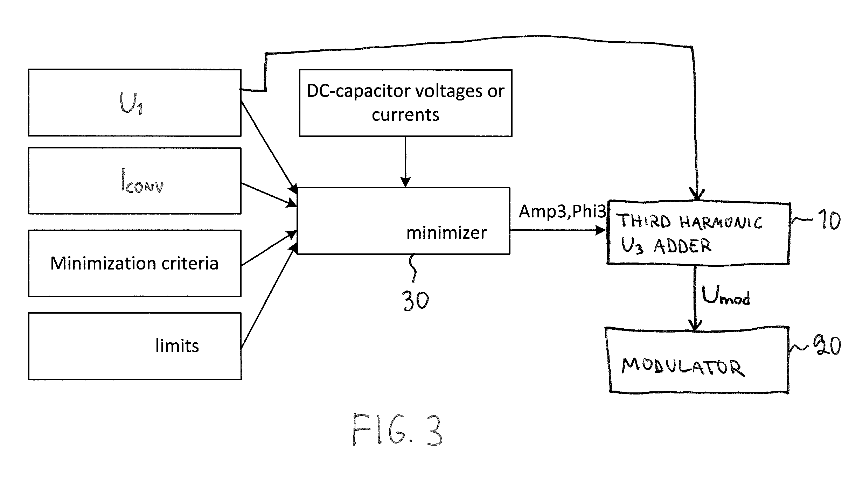

Figure 3 shows a block diagram of an arrangement according to an embodiment. According to an embodiment, an adder 10 receives a voltage reference U₁ of the inverter. The voltage reference U₁ of the inverter may originate from a current regulator (not shown) of the inverter or a similar control entity depending on the control method used in the inverter. The voltage reference U₁ of the inverter is modified in the adder 10 by adding a third harmonic U₃ to the provided voltage reference U₁, where
U₁ = a*sin(ωt), and
U₃ = Amp3*sin(3ωt+Phi3), where
a = amplitude of the voltage reference,
ω = angular velocity,
t = time,
Amp3 = amplitude of the third harmonic, and
Phi3 = phase difference of the third harmonic.

The adder 10 thus produces a modified voltage reference U_{mod} = U₁ + U₃, which is conveyed to the modulator 20 of the inverter for pulse width modulation controlling the inverter according to the modified voltage reference U_{mod}. The modulator 20 thus controls the controllable switches S₁ to S₁₂ of the inverter according to the modified voltage reference U_{mod} such that the inverter produces an output voltage corresponding to the modified voltage reference U_{mod}. According to an embodiment, the amplitude and/or the phase difference of the third harmonic added to the voltage reference U₁ of the inverter is adjusted such that a quantity indicating a magnitude of a current stress on the first capacitance and the second capacitance at a frequency of the third harmonic is reduced substantially to a minimum or below a predetermined level. The minimum may be a local minimum or a global minimum, for example. This adjusting may be performed by a minimizer 30 which determines values of the amplitude Amp3 and/or the phase difference Phi3 of the third harmonic with which the quantity indicating a magnitude of a current stress on the first capacitance and the second capacitance at a frequency of the third harmonic is reduced substantially to a minimum or below a predetermined level. The minimizer 30 then provides the determined values of the amplitude Amp3 and/or the phase difference Phi3 of the third harmonic to the adder 10 which sets the amplitude Amp3 and/or the phase difference Phi3 of the third harmonic U₃ to be added to the provided voltage reference U₁ accordingly. According to an embodiment, the adjusting of the amplitude Amp3 and/or the phase difference Phi3 of the third harmonic may be performed continuously or at predetermined intervals or when an operating point of the inverter changes, for example. The operating point of the inverter may be defined by an AC voltage, an AC current and/or a DC voltage(s) of the inverter, for example.

According to an embodiment, the quantity indicating the magnitude of the current stress may be a third harmonic frequency component of a difference between a current flowing through the first capacitance C_{DCP} and a current flowing through the second capacitance C_{DCN}, or a quantity indicative thereof. According to another embodiment, the quantity indicating the magnitude of the current stress may be a third harmonic frequency component of a voltage of the neutral direct current pole of the inverter, or a quantity indicative thereof. It should be noted, however, that any quantity indicating the magnitude of the current stress on the first capacitance and the second capacitance at a frequency of the third harmonic may be used.

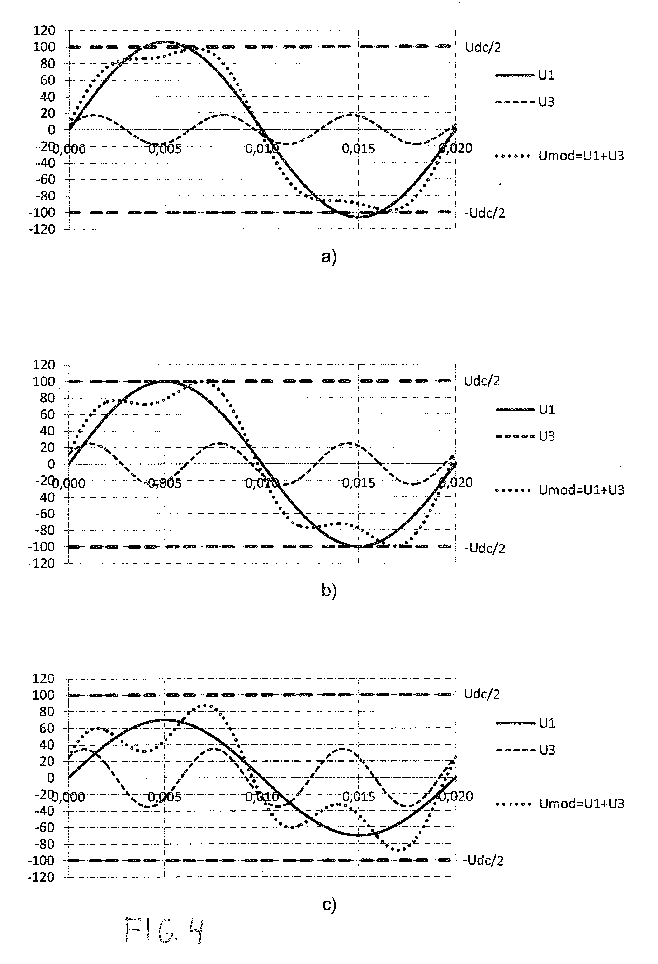

Figure 4 shows examples of resulting modified voltage references U_{mod} according to embodiments when the amplitude Amp3 and the phase difference Phi3 of the third harmonic has been adjusted. Example a) of Figure 4 shows an example in which the added third harmonic U₃ is 16.7% of the basic wave U₁ and has a phase difference Phi3 of 20° when the basic wave U₁ = 106%. Example b) of Figure 4 shows an example in which the added third harmonic U₃ is 25% of the basic wave U₁ and has a phase difference Phi3 of 30° when the basic wave U₁ = 100%. Example c) of Figure 4 shows an example in which the added third harmonic U₃ is 50% of the basic wave U₁ and has a phase difference Phi3 of 45° when the basic wave U₁ = 70%.

The operation of the minimizer 30 in the exemplary arrangement of Figure 3 may be based on a minimization algorithm which may receive various parameters in order to perform the minimization, i.e., the determination of values of the amplitude Amp3 and/or the phase difference Phi3 of the third harmonic with which the quantity indicating a magnitude of a current stress on the first capacitance and the second capacitance at a frequency of the third harmonic is reduced substantially to a minimum or below a predetermined level. The minimizer 30 may receive the voltage reference U₁ of the inverter, the current I_{CONV} of the inverter and possible limits. These possible limits may comprise data relative to the temperature of the power semiconductors whereby the minimization may be limited in order to prevent an overheating of the semiconductors. Other possible limits may comprise a distortion of the output voltage of the inverter or earth leakage current (in the frequency of the third harmonic), for example. The minimizer 30 may further receive minimization criteria and then perform the minimization on the basis of the received information. The minimization criteria may set the predetermined level below which the quantity indicating the magnitude of the current stress should be minimized if the minimization target is not the minimum value. The minimizer 30 may receive the quantity to be minimized in the form of voltages or currents of the capacitors of the DC intermediate circuit or some other quantity or quantities in a known relation thereto, for example.

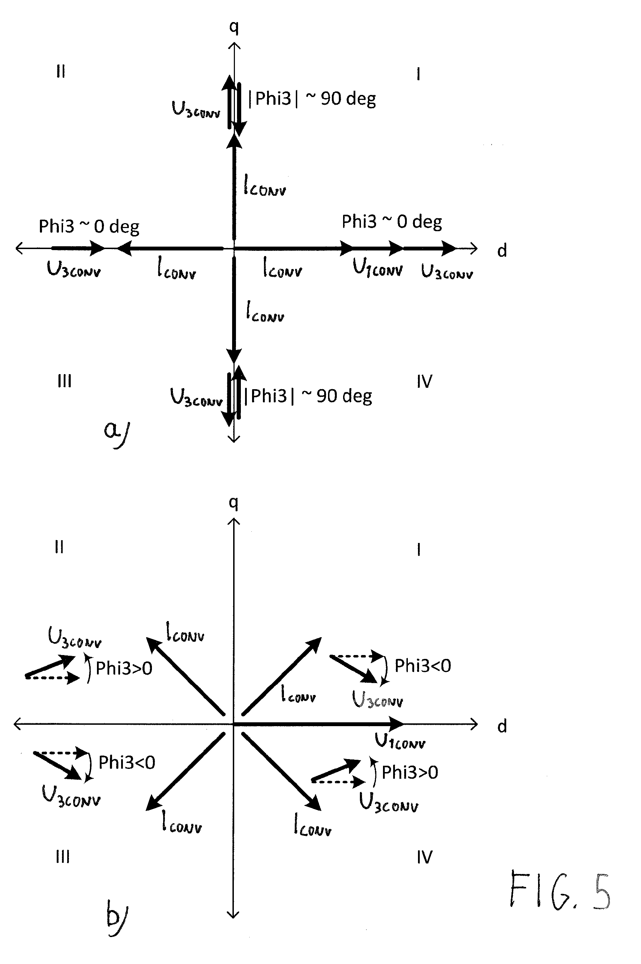

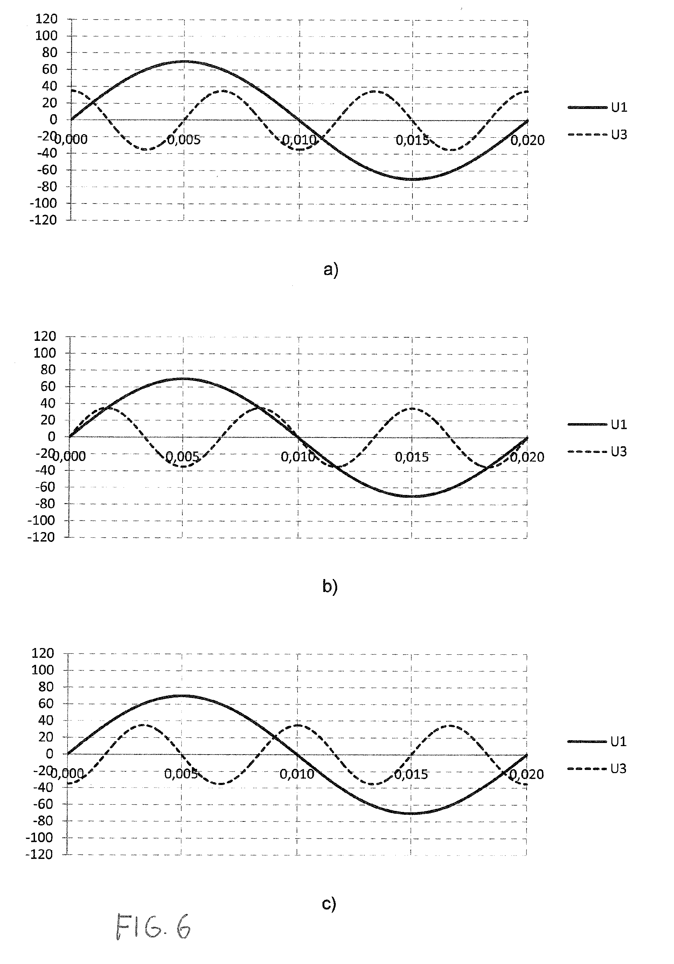

The minimization, performed by the minimizer 30, for example, or another entity, according to an embodiment, may be considered as a function of the current and voltage produced by the inverter. Figure 5 illustrates how the phase difference Phi3 of the third harmonic may be adjusted according to embodiments. In Figure 5 the representation has been made in a coordinate system in which the basic frequency voltage U_{1CONV} of the inverter has the direction of the d-axis. When the current I_{CONV} of the inverter has the direction of the d-axis or q-axis, the phase difference Phi3 of the third harmonic U_{3CONV} is according to example a) of Figure 5 either 0 or then it is ±90° with respect to the basic wave. When the current I_{CONV} of the inverter is in one of the main sectors I, II, III, IV, the phase difference Phi3 of the third harmonic U_{3CONV} may be changed between -90°<Phi3<+90° as illustrated in example b) of Figure 5. Figure 6 shows the waveforms of the basic wave U₁ and the third harmonic U₃ when a) Phi3 = +90°, b) Phi3 = 0° and c) Phi3 = -90°. According to an embodiment, the phase difference Phi3 may be the principal variable with which the low frequency current stress on the capacitors is minimized. According to an embodiment, when the phase difference adjustment has reached its minimum result, it is possible to adjust the amplitude Amp3 of the third harmonic in order to achieve a better minimization result. A typical value of the amplitude Amp3 of the third harmonic is about 1/6 to 1/4 of the amplitude of the basic wave. This value may be increased over 1/4 within the limits of the control system, especially when the current of the inverter approaches the q-axis. According to an embodiment, it is also possible to determine the effect of the change of the amplitude with each change of the phase difference before the next change of the phase difference. According to an embodiment, it is also possible to use tabulated values of the amplitude and/or the phase difference of the third harmonic which have been determined in advance for each operating point of the inverter such that ideal values of the amplitude and/or the phase difference of the third harmonic, which minimize the low frequency current stress on the capacitors, are selected, by the minimizer 30 or another entity, according to the current operating point of the inverter. The operating point of the inverter may be defined by an AC voltage, an AC current and/or a DC voltage(s) of the inverter, for example.

While the above examples model the third harmonic with the amplitude Amp3 and the phase difference Phi3, it should be noted that the third harmonic could be modelled, for example, with vector components u3d and u3q instead, wherein Amp3 ∼ sqrt(u3d² + u3q²) and Phi3 ∼ tan⁻¹(u3q/u3d). The minimization algorithm or entity performing the minimization could thus use such vector components in the minimization process. The adjustment of the vector components u3d and/or u3q nevertheless results in an adjustment of the amplitude and/or the phase difference of the third harmonic as defined above.

The arrangement of Figure 3 or another apparatus implementing the various embodiments described above may be part of the control system of the inverter, for example. It is also possible to use additional or separate logical or physical units for performing the functionality of the invention. An apparatus according to any one of the above embodiments, or a combination thereof, may be implemented as one unit or as two or more separate units that are configured to implement the functionality of the various embodiments. Here the term 'unit' refers generally to a physical or logical entity, such as a physical device or a part thereof or a software routine.

An apparatus according to any one of the embodiments may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a CPU control unit. The CPU control unit is controlled by a sequence of program instructions transferred to the CPU from the RAM. The CPU control unit may contain a number of microinstructions for basic operations. The implementation of the microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention, or a part thereof, may further comprise suitable input means for receiving e.g. measurement and/or control data, and output means for outputting e.g. control data. It is also possible to use analog circuits, programmable logic devices (PLD), or discrete electric components and devices for implementing the functionality according to any one of the embodiments.

The invention can be implemented in existing system elements or by using separate dedicated elements or devices in a centralized or distributed manner. Present inverters, for example, can comprise programmable logic devices or processors and memory that can be utilized in the functions according to embodiments of the invention. Thus, all modifications and configurations required for implementing an embodiment of the invention e.g. in existing inverters may be performed as software routines, which may be implemented as added or updated software routines. If at least part of the functionality of the invention is implemented by software, such software can be provided as a computer program product comprising computer program code which, when run on a computer, causes the computer or a corresponding arrangement to perform the functionality according to the invention as described above. Such a computer program code may be stored or generally embodied on a computer readable medium, such as a suitable memory, e.g. a flash memory or an optical memory, from which it is loadable to the unit or units executing the program code. In addition, such a computer program code implementing the invention may be loaded to the unit or units executing the computer program code via a suitable data network, for example, and it may replace or update a possibly existing program code.

It is obvious to a person skilled in the art that, as technology advances, the basic idea of the invention may be implemented in various ways. The invention and its embodiments are thus not restricted to the above examples but may vary within the scope of the claims.

## Claims

1. A method for reducing current stress in an intermediate circuit of a three-level inverter comprising a first capacitance (C_{DCP}) connected between a positive direct current pole (U_{DCP}) of the inverter and a neutral direct current pole (M) of the inverter and a second capacitance (C_{DCN}) connected between the neutral direct current pole of the inverter and a negative direct current pole (U_{DCN}) of the inverter, the method comprising:
modifying a voltage reference U₁ of the inverter by adding a third harmonic U₃ to the voltage reference, where
U₁ = a*sin(ωt), and
U₃ = Amp3*sin(3ωt+Phi3), where
a = amplitude of the voltage reference,
ω = angular velocity,
t = time,
Amp3 = amplitude of the third harmonic, and
Phi3 = phase difference of the third harmonic; and
pulse width modulation controlling the inverter according to the modified voltage reference U_{mod} = U₁ + U₃, **characterized in that** the method comprises:
adjusting the amplitude and/or the phase difference of the third harmonic added to the voltage reference of the inverter such that a quantity indicating a magnitude of a current stress on the first capacitance (C_{DCP}) and the second capacitance (C_{DCN}) at a frequency of the third harmonic is reduced substantially to a minimum or below a predetermined level.

2. A method according to claim 1, **characterized in that** the minimum is a local minimum or a global minimum.

3. A method according to claim 1 or 2, **characterized in that** the adjusting of the amplitude and/or the phase difference of the third harmonic is performed continuously or at predetermined intervals or when an operating point of the inverter changes.

4. A method according to claim 3, **characterized in that** the operating point of the inverter is defined by an AC voltage, an AC current and/or a DC voltage(s) of the inverter.

5. A method according to any one of claims 1 to 4, **characterized in that** the quantity indicating the magnitude of the current stress is a third harmonic frequency component of a difference between a current flowing through the first capacitance (C_{DCP}) and a current flowing through the second capacitance (C_{DCN}), or a quantity indicative thereof.

6. A method according to any one of claims 1 to 4, **characterized in that** the quantity indicating the magnitude of the current stress is a third harmonic frequency component of a voltage of the neutral direct current pole (M) of the inverter, or a quantity indicative thereof.

7. A computer program product comprising computer program code, wherein execution of the program code on a computer causes the computer to carry out the steps of the method according to any one of claims 1 to 6.

8. An arrangement for reducing current stress in an intermediate circuit of a three-level inverter comprising a first capacitance (C_{DCP}) connected between a positive direct current pole (U_{DCP}) of the inverter and a neutral direct current pole (M) of the inverter and a second capacitance (C_{DCN}) connected between the neutral direct current pole of the inverter and a negative direct current pole (U_{DCN}) of the inverter, the arrangement comprising:
means (10) for modifying a voltage reference U₁ of the inverter by adding a third harmonic U₃ to the voltage reference, where
U₁ = a*sin(ωt), and
U₃ = Amp3*sin(3ωt+Phi3), where
a = amplitude of the voltage reference,
ω = angular velocity,
t = time,
Amp3 = amplitude of the third harmonic, and
Phi3 = phase difference of the third harmonic; and
means (20) for pulse width modulation controlling the inverter according to the modified voltage reference U_{mod} = U₁ + U₃, **characterized in that** the arrangement comprises:
means (30) for adjusting the amplitude and/or the phase difference of the third harmonic added to the voltage reference of the inverter such that a quantity indicating a magnitude of a current stress on the first capacitance (C_{DCP}) and the second capacitance (C_{DCN}) at a frequency of the third harmonic is reduced substantially to a minimum or below a predetermined level.

9. An arrangement according to claim 8, **characterized in that** the minimum is a local minimum or a global minimum.

10. An arrangement according to claim 8 or 9, **characterize**d in that the means (30) for adjusting are configured to perform the adjusting of the amplitude and/or the phase difference of the third harmonic continuously or at predetermined intervals or when an operating point of the inverter changes.

11. An arrangement according to claim 10, **characterized in that** the operating point of the inverter is defined by an AC voltage, an AC current and/or a DC voltage(s) of the inverter.

12. An arrangement according to any one of claims 8 to 11, **characterized in that** the quantity indicating the magnitude of the current stress is a third harmonic frequency component of a difference between a current flowing through the first capacitance (C_{DCP}) and a current flowing through the second capacitance (C_{DCN}), or a quantity indicative thereof.

13. An arrangement according to any one of claims 8 to 11, **characterized in that** the quantity indicating the magnitude of the current stress is a third harmonic frequency component of a voltage of the neutral direct current pole (M) of the inverter, or a quantity indicative thereof.

14. A three-level inverter comprising a positive direct current pole (U_{DCP}), a negative direct current pole (U_{DCN}), and a neutral direct current pole (M), **characterized in that** the inverter comprises an arrangement according to any one of claims 8 to 13.

15. An inverter according to claim 14, **characterized in that** the inverter comprises at least three switching branches, wherein each switching branch comprises at least two controllable semiconductor switches (S₁, S₂, S₃, S₄, S₅, S₆, S₇, S₈, S₉, S₁₀, S₁₁, S₁₂) connected in series between the positive direct current pole (U_{DCP}) and the negative direct current pole (U_{DCN}).

16. An inverter according to claim 15, **characterized in that** the inverter is a neutral-point-clamped inverter or an active neutral-point-clamped inverter.
